# EUROPÄISCHE PATENTSCHRIFT

(11) **EP 1 732 984 B1**
(45) Veröffentlichungstag und Bekanntmachung des Hinweises auf die Patenterteilung: **30.01.2008**
(21) Anmeldenummer: 05739389.4
(22) Anmeldetag: 22.03.2005
(51) Int. Cl.: C08L 61/28

(54) **WÄSSRIGE MELAMINHARZMISCHUNG, VERFAHREN ZU DEREN HERSTELLUNG UND DEREN VERWENDUNG ZUM TRÄNKEN VON SAUGFÄHIGEM TRÄGERMATERIAL, SOWIE UNTER VERWENDUNG DER MELAMINHARZMISCHUNG HERGESTELLTES VERBUNDMATERIAL**
AQUEOUS MELAMINE RESIN MIXTURE, METHOD FOR PRODUCTION AND USE THEREOF FOR THE IMPREGNATION OF ABSORBENT SUPPORT MATERIAL AN COMPOSITE MATERIAL PRODUCED USING SAID MELAMINE RESIN MIXTURE
MÉLANGE AQUEUX DE RÉSINE MÉLAMINE, PROCÉDÉ DE PRODUCTION DUDIT MÉLANGE ET SON UTILISATION POUR L'IMPRÉGNATION DE MATIÈRE DE SUPPORT ABSORBANTE, AINSI QUE MATIÈRE COMPOSITE PRODUITE À L'AIDE DUDIT MÉLANGE

(30) Priorität: 29.03.2004 DE 102004015737; 22.07.2004 DE 102004035657
(43) Veröffentlichungstag der Anmeldung: 20.12.2006
(73) Patentinhaber: BASF Aktiengesellschaft, 67056 Ludwigshafen (DE)
(72) Erfinder: LUNKWITZ, Ralph, 67434 Neustadt (DE); WEINKÖTZ, Stephan, 67473 Lindenberg (DE); DECHER, Jakob, 67240 Bobenheim-Roxheim (DE); MARTIN-PORTUGUES, Marta, 67071 Ludwigshafen (DE); REIF, Martin, 67354 Römerberg (DE); ROBERT, Alain, 67150 Niederkirchen (DE); WIPPEL, Wolfgang, 67067 Ludwigshafen (DE)
(86) Internationale Anmeldenummer: PCT/EP2005/003001
(87) Internationale Veröffentlichungsnummer: WO 2005/095514

(56) Entgegenhaltungen:
- WO-A-02/28934
- DE-A1- 4 129 326
- FR-A- 2 481 299
- GB-A- 851 295
- US-A- 4 141 872
- US-B1- 6 355 794

## Beschreibung

Die vorliegende Erfindung betrifft eine wässrige Melaminharzmischung mit einem Gehalt an Harz im Bereich von 50 bis 70 Gew.-% bezogen auf die wässrige Melaminharzmischung, wobei im Harz Melamin und Formaldehyd in einem Molverhältnis von 1:3 bis 1:1 vorliegen und das Harz 1 bis 10 Gew.-% mehrwertige Alkohole, 0 bis 8 Gew.-% Caprolactam und 0,5 bis 10 Gew.-% 2-(2-Phenoxy-ethoxy)-ethanol und/oder Polyethylenglykol mit einer mittleren Molmasse von 200 bis 1500 jeweils bezogen auf die wässrige Melaminharzmischung enthält. Ferner betrifft die Erfindung ein Verfahren zur Herstellung dieser Melaminharzmischungen und deren Verwendung zum Tränken von saugfähigern Papier, sowie ein Verbundmaterial aus der Melaminharzmischung und einem Trägermaterial.

Im Stand der Technik finden sich vielfältige Vorschläge zur Optimierung von Melaminharzmischungen. In den letzten Jahrzehnten lag der Schwerpunkt der Verbesserungen auf den Gebieten der Lagerstabilität, Formaldehydemission, Oberflächenqualität, Verformbarkeit, Transparenz, UV-Stabilität und Glanz.

Beispielsweise offenbart DE-A 38 14 292 zumindest partiell mit Alkoholen mit 2 bis 6 C-Atomen oder auch mit Glykolen, beispielsweise Polyethylenglykol, veretherte Melamin-Formaldehyd-Kondensate, die sich ohne Mitverwendung organischer Lösemittel insbesondere zum Tränken dicker Papiere eignen und ferner eine gute Penetration des Tränkharzes geben, eine geringe Quellung des Papiers bei guter Haftung bewirken und eine ausreichende Spaltfestigkeit und Elastizität des getränkten Papiers aufweisen. WO-A-02/28934 offenbart wäßrige Harzzusammensetzungen, die ein aus Melamin und Formaldehyderhältliches Harz und gegebenenfalls einem Zusatzstoff enthalten.

Ein weiteres Problem hingegen ist die Staubbildung beim Schneiden von beschichteten Trägermaterialien oder bei der stapelweisen Ablagerung von den beschichteten Materialien. Ferner tritt verstärkt Staubbildung auf, wenn von einem Lager aus aufgestapeltem beschichteten Trägermaterial besagte Materialien Stück für Stück entnommen werden.

Der Erfindung lag daher die Aufgabe zugrunde, eine Melaminharzmischung und deren Herstellweise aufzufinden, die sich zum Tränken von saugfähigem Trägermaterial und zur Herstellung von Verbundmaterial eignet. Ferner lag die Aufgabe darin, ein Verbundmaterial auszufinden, dass eine verringerte Staubbildung beim Schneiden oder Stapeln aufweisen.

Es wurde demnach gefunden, dass Melaminharzfilme oder -folien, hergestellt aus der eingangs definierten Melaminharzmischung, eine geringe Staubbildung aufweisen.

Bevorzugt weist die Melaminharzmischung ein Molverhältnis von Melamin zu Formaldehyd von 1:1,3 bis 1:2,0, insbesondere von 1:1,5 bis 1:1,7 auf.

Weiterhin enthält die Melaminharzmischung bevorzugt 3 bis 6 Gew.-% eines oder mehrerer mehrwertiger Alkohole bezogen auf die wässrige Melaminharzmischung, besonders bevorzugt ein oder mehrere C₂- bis C₁₂-Diole wie beispielsweise Diethylenglykol, Propylenglykol, Butylenglykol, Pentandiol und/oder Hexandiol, insbesondere Diethylenglykol.

Ferner enthält die Melaminharzmischung bevorzugt weniger als 6 Gew.-% Caprolactam, insbesondere weniger als 4 Gew.-% bezogen auf die wässrige Melaminharzmischung.

Darüber hinaus enthält die erfindungsgemäße Melaminharzmischung bevorzugt 1 bis 5 Gew.-% 2-(2-Phenoxy-ethoxy)-ethanol und/oder Polyethylenglykol mit einer mittleren Molmasse von 200 bis 1500, insbesondere 1,5 bis 3 Gew.-% 2-(2-Phenoxy-ethoxy)-ethanol und/oder Polyethylenglykol mit einer mittleren Molmasse von 200 bis 1500. Eine Mischung aus Polyethylenglykol und 2-(2-Phenoxy-ethoxy)-ethanol ist in allen Mischungsverhältnissen denkbar. Besonders bevorzugt ist jedoch die Verwendung von Polyethylenglykol mit einer mittleren Molmasse von 200 bis 1500 oder 2-(2-Phenoxy-ethoxy)-ethanol. Bei der Verwendung von Polyethylenglykol ist Polyethylenglykol mit einer mittleren Molmasse von 300 bis 1000 bevorzugt, insbesondere mit einer mittleren Molmasse von 400 bis 600.

Vorteilhaft liegt die Gesamtmenge aus mehrwertigem Alkohol und 2-(2-Phenoxy-ethoxy)-ethanol und/oder Polyethylenglykol bei weniger als 10 Gew.-% bezogen auf die wässrige Melaminharzmischung, bevorzugt bei weniger als 8 Gew.-%.

Gegebenenfalls können weitere Zusatzstoffe wie beispielsweise Amidosulfonsäure und/oder p-Toluolsulfonsäureamid in einer Menge von jeweils kleiner 1 Gew.-% bezogen auf die wässrige Melaminharzmischung zugesetzt werden.

Vorteilhaft weist die erfindungsgemäße Melaminharzmischung eine Dichte bei 20 °C im Bereich von 1,1 bis 1,5 g/ml, bevorzugt 1,15 bis 1,45 g/ml und besonders bevorzugt 1,2 bis 1,4 g/ml auf. Ferner weist die Melaminharzmischung in der Regel einen pH-Wert im Bereich von 8 bis 12, bevorzugt 8,5 bis 11 und besonders bevorzugt 9 bis 10,5 auf. Der Trübungspunkt liegt vorteilhaft im Bereich von 35 bis 65°C, bevorzugt bei 35 bis 50°C, insbesondere bei 40 bis 45°C.

Zur Messung des Trübungspunktes wird eine Probe des Umsetzungsprozesses soweit mit Wasser verdünnt, dass der Gehalt an Melaminformaldehydkondensat, das bei der Umsetzung entstanden ist und gegebenenfalls noch vorhandenes monomeres Melamin und Formaldehyd enthält, 6,75 Gew.-% beträgt. Die Menge an Melaminformaldehydkondensat, Melamin und Formaldehyd lässt sich aus der Menge der Einsatzstoffe errechnen, wobei das in dem Melaminformaldehydkondensat gebundene Melamin und Formaldehyd auch als monomeres Melamin und Formaldehyd gerechnet wird. Dieser errechnete Gehalt stimmt mit dem nach der in der DIN 12 605 beschriebenen Methode ermittelten Wert des Feststoffgehalts dann überein, wenn man diesem noch ca. 2 % hinzurechnet. Die so vorbereitete Probenlösung wird bis zur Bildung einer klaren Lösung erwärmt und anschließend mit einer Geschwindigkeit von ca. 10°C pro Minute abgekühlt. Der Trübungspunkt ist die Temperatur bei der eine Trübung entsteht, die mit bloßem Auge bei Durchsicht durch ein Probegefäß mit einer Schichtdicke von 1 cm sichtbar ist.

Vorteilhaft weist die Melaminharzmischung eine Viskosität bei 20°C von 50 bis 3000 mPa·s auf, bevorzugt 70 bis 200 mPa·s.

Die Wasserverträglichkeit liegt in der Regel bei mindestens 1:1,5 (Harz: Wasser).

Ferner betrifft die Erfindung ein Verfahren zur Herstellung der erfindungsgemäßen Melaminharzmischung, wobei Melamin und Formaldehyd in einem Molverhältnis von 1:3 bis 1:1 in einem wässrigen Medium mit 1 bis 10 Gew.-% mehrwertigen Alkoholen, 0 bis 8 Gew.-% Caprolactam und 0,5 bis 10 Gew.-% 2-(2-Phenoxy-ethoxy)-ethanol und/oder Polyethylenglykol mit einer mittleren Molmasse von 200 bis 1500 jeweils bezogen auf die wässrige Melaminharzmischung bei einem pH-Wert von 8 bis 10 und bei einer Temperatur von 60 bis 160°C umgesetzt werden.

Vorteilhaft liegt der pH-Wert der wässrigen Kondensationsphase im Bereich von 8,2 bis 9,7, bevorzugt 8,4 bis 9,4, insbesondere 8,8 bis 9,3. Der Temperaturbereich liegt bevorzugt bei 80 bis 120°C und besonders bevorzugt bei 90 bis 110°C. Das Molverhältnis von Melamin zu Wasser beträgt vorteilhaft 1 : 0,1 bis 3,0, bevorzugt 0,1 bis 2,8 und besonders bevorzugt 0,1 bis 2,5. Zur Einstellung dieser Bereiche kann gegebenenfalls Wasser durch Destillation bei Normaldruck entfernt werden.

Melamin wird üblicherweise in fester Form eingesetzt. Formaldehyd kommt üblicherweise in Form konzentrierter wässriger Lösungen, beispielsweise als 30 bis 60 gewichtsprozentige wässrige Lösung, bevorzugt als 45 bis 55 gewichtsprozentige Lösung, zum Einsatz.

Vorteilhaft wird die Kondensationsreaktion so lange durchgeführt, bis die Melaminharzmischung einen Trübungspunkt von 35 bis 65°C aufweist.

Die Erfindung betrifft ferner die Verwendung der erfindungsgenäßen Melaminharzmischungen zum Tränken von saugfähigem Papier, beispielsweise von Papierbahnen, Vliesstoffen oder anderen, dem Fachmann geläufigen Geweben und Gewirken. Weiterhin kann das Tränkharz zur Herstellung von Overlays, imprägnierter Cellulose, insbesondere α-Cellulose, für Laminatfußböden, die beispielsweise mit einer Oberflächenkomponente wie Pigmenten oder oberflächenresistentem Korund versetzt sind, verwendet werden.

Weiterhin betrifft die Erfindung ein Verbundmaterial, das dadurch erhältlich ist, dass ein mit der erfindungsgemäßen Melaminharzmischung behandeltes Trägermaterial einer thermischer Behandlung unterzogen wird. Das erfindungsgemäße Verbundmaterial kann durch ein Verfahren erhalten werden, wobei das Trägermaterial und die wässrige Harzzusammensetzung miteinander in einem Temperaturbereich von 60 bis 300°C in Kontakt gebracht werden. Es ist erfindungsgemäß bevorzugt, dass das InKontaktbringen, d.h. das Verpressen nach Vortrocknung, insbesondere unter Druck erfolgt, geeignete Drücke sind 1 bis 100 bar, bevorzugt 10 bis 50 bar und besonders bevorzugt 15 bis 25 bar.

### Beispiele

Zusammensetzung der Harzmischungen:
Molverhältnis Melamin zu Formaldehyd = 1:1,6
4,4 Gew.-% Diethylenglykol
2,5 Gew.-% Caprolactam
2 Gew.-% Modifizierungsmittel A - F
Trübungspunkt: 50°C
Feststoffgehalt 60%

### Modifizierungsmittel:

A Polyethylenglykol mit einer mittleren Molmasse von 400 (erfindungsgemäß 1)
B 2-(2-Phenoxy-ethoxy)-ethanol (erfindungsgemäß 2)
C Mischung aus Polyethylenglykol mit einer mittleren Molmasse von 400 und 2-(2-Phenoxy-ethoxy)-ethanol mit einem Mischungsverhältnis von 1:1 (erfindungsgemäß 3)
D Isomerengemisch aus Hexan-1,6-diol und 2-Methyl-2,4-pentan-diol (Vergleich 1)
E Fettalkoholethoxylat (Gemisch aus C16/C18 + 6 Mol Ethylenoxid) (Vergleich 2)
F kein Modifizierungsmittel (Vergleich 3)

Die Harzmischungen mit den Modifizierungsmitteln A bis F wurden mehrmals auf schwarzes Dekorpapier aufgetragen (jeweils ca. 0.5 ml) und im Trockenschrank bei drei unterschiedlichen Temperaturen (120°C, 150°C und 180°C) für jeweils 1, 2 und 3 Minuten getrocknet.

Anschließend wurden bei den eingetrockneten und zum Teil glasartig erstarrten Harze die Eintrübungen bzw. Blasenbildung optisch beurteilt. Der Grad der Blasenbildung und Eintrübung wurde in einer Skala von 1 bis 6 eingestuft.

### Beurteilung

1 = keine Blasenbildung, keine Eintrübung
2 = sehr leichte Blasenbildung, sehr leichte Eintrübung
3 = sichtbare Blasenbildung, sichtbare Eintrübung
4 = mäßig starke Blasenbildung, mäßig starke Eintrübung
5 = starke Blasenbildung, starke Eintrübung
6 = sehr starke Blasenbildung, sehr starke Eintrübung

Bei der beschriebenen Prüfmethode handelt es sich um den "Staubvortest".

| Beispiele | | Erfindungsgemäß | | | Vergleichsbeispiele | | |
|---|---|---|---|---|---|---|---|
| | | 1 | 2 | 3 | 1 | 2 | 3 |
| Modifizierungsmittel | | A | B | C | D | E | F |
| 120°C | 1 min | 1 | 2 | 1 | 2 | 2 | 2 |
| | 2 min | 2 | 2 | 2 | 3 | 3 | 3 |
| | 3 min | 2 | 3 | 3 | 3 | 4 | 3 |
| 150°C | 1 min | 1 | 2 | 2 | 2 | 2 | 3 |
| | 2 min | 2 | 3 | 2 | 2 | 3 | 4 |
| | 3 min | 2 | 3 | 3 | 3 | 4 | 4 |
| 180°C | 1 min | 2 | 3 | 2 | 3 | 3 | 4 |
| | 2 min | 2 | 3 | 3 | 4 | 5 | 5 |
| | 3 min | 3 | 3 | 3 | 4 | 5 | 6 |
| **Summe** | | **17** | **24** | **21** | **26** | **31** | **34** |

## Patentansprüche

1. Wässrige Melaminharzmischung mit einem Gehalt an Harz im Bereich von 50 bis 70 Gew.-% bezogen auf die wässrige Melaminharzmischung, wobei im Harz Melamin und Formaldehyd in einem Molverhältnis von 1:3 bis 1:1 vorliegen und das Harz 1 bis 10 Gew.-% mehrwertige Alkohole, 0 bis 8 Gew.-% Caprolactam und 0,5 bis 10 Gew.-% 2-(2-Phenoxy-ethoxy)-ethanol und/oder Polyethylenglykol mit einer mittleren Molmasse von 200 bis 1500 jeweils bezogen auf die wässrige Melaminharzmischung enthält.

2. Wässrige Melaminharzmischung nach Anspruch 1, wobei das Polyethylenglykol eine mittlere Molmasse von 300 bis 1000 aufweist.

3. Wässrige Melaminharzmischung nach Anspruch 1 oder 2, wobei die Gesamtmenge aus mehrwertigen Alkoholen und Polyethylenglykol und/oder 2-(2-Phenoxy-ethoxy)-ethanol weniger als 10 Gew.-% bezogen auf die wässrige Melaminharzmischung ist.

4. Wässrige Melaminharzmischung nach den Ansprüchen 1 bis 3, wobei als mehrwertige Alkohole C₂- bis C₁₂-Diole eingesetzt werden.

5. Wässrige Melaminharzmischung nach den Ansprüchen 1 bis 4, die 1 bis 5 Gew.-% 2-(2-Phenoxy-ethoxy)-ethanol und/oder Polyethylenglykol mit einer mittleren Molmasse von 400 bis 600 aufweist.

6. Wässrige Melaminharzmischung nach den Ansprüchen 1 bis 5, die einen Trübungspunkt von 35 bis 65°C aufweist.

7. Wässrige Melaminharzmischung nach den Ansprüchen 1 bis 6, die eine Dichte bei 20°C von 1,1 bis 1,5 g/ml aufweist.

8. Verfahren zur Herstellung einer wässrigen Melaminharzmischung, **dadurch gekennzeichnet, dass** Melamin und Formaldehyd in einem Molverhältnis von 1:3 bis 1:1 mit 1 bis 10 Gew.-% mehrwertigen Alkoholen, 0 bis 8 Gew.-% Caprolactam und 0,5 bis 10 Gew.-% 2-(2-Phenoxy-ethoxy)-ethanol und/oder Polyethylenglykol mit einer mittleren Molmasse von 200 bis 1500 jeweils bezogen auf die wässrige Melaminharzmischung bei einem pH-Wert von 8 bis 10 und bei einer Temperatur von 60 bis 160°C umgesetzt werden.

9. Verwendung der Melaminharzmischung nach den Ansprüchen 1 bis 7 zum Tränken von saugfähigem Papier.

10. Verbundmaterial, dadurch erhältlich, dass ein mit einer wässrigen Melaminharzmischung nach den Ansprüchen 1 bis 7 behandeltes Trägermaterial einer thermischer Behandlung unterzogen wird.

## Claims

1. An aqueous melamine resin mixture with a resin contest in the range from 50 to 70% by weight, based on the aqueous melamine resin mixture, where melamine and formaldehyde are present in a molar ratio of from 1:3 to 1:1 in the resin, and the resin comprises from 1 to 10% by weight of polyhydric alcohols, from 0 to 8% by weight of Caprolactam, and from 0.5 to 10% by weight of 2-(2-phenoxy-ethoxy)ethanol and/or polyethylene glycol with an average molecular weight of from 200 to 1500, based in each case on the aqueous melamine resin mixture.

2. The aqueous melamine resin mixture according to claim 1, where the polyethylene glycol has an average molecular weight of from 300 to 1000.

3. The aqueous melamine resin mixture according to claim 1 or 2, where the entire amount composed of polyhydric alcohols and polyethylene glycol and/or 2-(2-phenoxyethoxy)ethanol is less than 10% by weight, based on the aqueous melamine resin mixture.

4. The aqueous melamine resin mixture according to claims 1 to 3, where the polyhydric alcohols used comprise C₂-C₁₂ diols.

5. The aqueous melamine resin mixture according to claims 1 to 4, which comprises from 1 to 5% by weight or 2-(2-phenoxyethoxy)ethanol and/or polyethylene glycol with an average molecular weight of from 400 to 600.

6. The aqueous melamine resin mixture according to claims 1 to 5, which has a cloud point of from 35 to 65°C.

7. The aqueous melamine resin mixture according to claims 1 to 6, which has a density at 20°C of from 1.1 to 1.5 g/ml.

8. A process for preparing an aqueous melamine resin mixture, which comprises reacting melamine and formaldehyde in a molar ratio of from 1:3 to 1:1 with from 1 to 10% by weight of polyhydric alcohols, from 0 to 8% by weight of caprolactam, and from 0.5 to 10% by weight of 2-(2-phenoxyethoxy)ethanol and/or polyethylene glycol with an average molecular weight of from 200 to 1500, based in each case on the aqueous melamine resin mixture, at a pH of from 8 to 10 and at a temperature of from 60 to 160°C.

9. The use of the melamine resin mixture according to claims 1 to 7 for the saturation of absorbent paper.

10. A composite material obtainable by subjecting a carrier material treated with an aqueous melamine resin mixture according to claims 1 to 7 to thermal treatment.

## Revendications

1. Mélange aqueux de résine de mélamine avec une teneur en résine dans l'intervalle compris entre 50 et 70% en poids, sur base du mélange aqueux de résine de mélamine, dans lequel dans la résine, la mélamine et le formaldéhyde sont présents dans un rapport molaire de 1:3 à 1:1, et la résine contient 1 à 10% en poids d'alcools polyvalents, 0 à 8% en poids de caprolactame et 0,5 à 10% en poids de 2-(2-phénoxyéthoxy)éthanol et/ou de polyéthylèneglycol ayant une masse molaire moyenne de 200 à 1500, chaque fois sur base du mélange aqueux de résine de mélamine.

2. Mélange aqueux de résine de mélamine selon la revendication 1, dans lequel le polyéthylèneglycol présente une masse molaire moyenne de 300 à 1000.

3. Mélange aqueux de résine de mélamine selon la revendication 1 ou 2, dans lequel la quantité totale d'alcools polyvalents et de polyéthylèneglycol et/ou de 2-(2-phénoxyéthoxy)éthanol est inférieure à 10% en poids, sur base du mélange aqueux de résine de mélamine.

4. Mélange aqueux de résine de mélamine selon les revendications 1 à 3, dans lequel on utilise comme alcools polyvalents des diols en C₂-C₁₂.

5. Mélange aqueux de résine de mélamine selon les revendications 1 à 4, qui présente 1 à 5% en poids de 2-(2-phénoxyéthoxy)éthanol et/ou de polyéthylèneglycol avec une masse molaire moyenne de 400 à 600.

6. Mélange aqueux de résine de mélamine selon les revendications 1 à 5, qui présente un point de trouble de 35 à 65°C.

7. Mélange aqueux de résine de mélamine selon les revendications 1 à 6, qui présente une densité à 20°C de 1,1 à 1,5 g/ml.

8. Procédé de fabrication d'un Mélange aqueux de résine de mélamine, **caractérisé en ce que** la mélamine et le formaldéhyde dans un rapport molaire de 1:3 à 1:1 sont mis à réagir avec 1 à 10% en poids d'alcools polyvalents, 0 à 8% en poids de caprolactame et 0,5 à 10% en poids de 2-(2-phénoxyéthoxy)éthanol et/ou de polyéthylèneglycol d'une masse molaire moyenne de 200 à 1500, chaque fois par rapport au mélange aqueux de résine de mélamine à un pH de 8 à 10 et à une température de 60 à 160°C.

9. Utilisation du mélange aqueux de résine de mélamine selon les revendications 1 à 7 pour l'imprégnation de papier absorbant.

10. Matériau composite qui S'obtient en soumettant un mélange aqueux de résine de mélamine selon les revendications 1 à 7 d'un matériau de support traité, à un traitement thermique.
